# EUROPEAN PATENT APPLICATION

(11) **EP 2 063 348 A2**
(43) Date of publication of application: **27.05.2009**
(21) Application number: 08167717.1
(22) Date of filing: 28.10.2008
(51) Int. Cl.: G06F 3/045

(54) **Touch display device and a method of determining a plurality of touch points thereof**

(30) Priority: 16.11.2007 TW 96143436
(71) Applicant: ASUSTeK Computer Inc., Peitou, Taipei 112 (TW)
(72) Inventor: Liu, Kuan-Lin, Taipei City 112 (TW); Hsieh, Ming-Chih, Taipei City 112 (TW); Lin, Chu-Hui, Taipei City 112 (TW)
(74) Representative: Viering, Jentschura & Partner

(57) **Abstract**

A touch display device and a method of determining a plurality of touching points thereof are disclosed. The touch display device has a control module, and a resistive touch panel with a first electrical conductive layer and a second electrical conductive layer. The first electrical conductive layer and the second electrical conductive layer have a first electrode, a second electrode, a third electrode, and a fourth electrode. The method has the steps of: when the first and the second electrical conductive layers have a plurality of touching points, selecting two electrodes in non-repeated combinations among the electrodes, applying a voltage value difference to the selected electrodes, and obtaining two voltage values from the non-selected electrode to obtain a plurality of voltage values; according to the plurality of voltages, calculating a plurality of equivalent resistive values of resistors; and obtaining the position of the plurality of touching points.

## Description

### BACKGROUND OF THE INVENTION

### 1. Field of the Invention

The present invention relates to a touch display device, and, more particularly, to a touch display device capable of determining the plurality of touching points.

### 2. Description of the Related Art

With technology improvement, many electronic devices have touch display devices, such as PDAs, mobile phones, or panel computers. Due to its operation convenience, the touch display device has become more and more common on different electronic devices. The resistive touch display device requires lower manufacturing cost and easier operation manner, therefore, the resistive touch display device is more popular.

However, in prior art technology, the resistive touch display device does not have a control module capable of determining two or a plurality of touching points at the same time, and users can only control one touching point while operating the touch display device. If the touch display device can have different touching control methods, it might have more various control manners and performance.

Therefore, it is desirable to provide a touch display device capable of determining the plurality of touching points to mitigate and/or obviate the aforementioned problems.

### SUMMARY OF THE INVENTION

A main objective of the present invention is to provide a touch display device capable of determining the plurality of touching points.

Another objective of the present invention is to provide a method of determining the plurality of touching points for a touch display device.

In order to achieve the above-mentioned objectives, a touch display device a control module, and a resistive touch panel. The resistive touch panel comprises a first electrical conductive layer and a second electrical conductive layer. The first electrical conductive layer and the second electrical conductive layer have a first electrode, a second electrode, a third electrode, and a fourth electrode, a control module, and a resistive touch panel. The control module electrically connected to the first electrode, the second electrode, the third electrode and the fourth electrode. Wherein when a plurality of touching points are generated between the first electrical conductive layer and the second electrical conductive layer, the control module repeatedly selects two electrodes in non-repeated combinations among the first electrode, the second electrode, the third electrode and the fourth electrode, applies a voltage value difference to the two selected electrodes, and measures two voltage values from the non-selected electrode, to obtain two voltage values, and then utilizing the same way to obtain a plurality of voltage values; the control module utilizes the plurality of voltage values to calculate a plurality of equivalent resistive values formed among the first electrode, the second electrode, the third electrode, the fourth electrode and the plurality of touching points and obtains the positions of the plurality of touching points according to the plurality of equivalent resistive values.

The method of the present invention comprises the steps of: when the first and the second electrical conductive layers have a plurality of touching points, selecting two electrodes in non-repeated combinations among the first electrode, the second electrode, the third electrode or the fourth electrode, applying a voltage value difference to the two selected electrodes, and obtaining two voltage values from the non-selected electrode to obtain two voltage values, and then utilizing the same way to obtain a plurality of voltage values; according to the plurality of voltages, calculating a plurality of equivalent values of resistors; and obtaining the position of the plurality of touching points.

Other objects, advantages, and novel features of the invention will become more apparent from the following detailed description when taken in conjunction with the accompanying drawings.

### BRIEF DESCRIPTION OF THE DRAWINGS

FIG. 1A-1B are structure drawings of a touch display device according to the present invention.
FIG. 2 is a flowchart of a method of determining a plurality of touch points on the touch display device according to the present invention.
FIG. 3 is an equivalent circuit drawing of a first embodiment of the touch display device according to the present invention.
FIG. 4 is an equivalent circuit drawing of a second embodiment of the touch display device according to the present invention.

FIG. 5 is an equivalent circuit drawing of a 5-wire resistive touch panel according to the present invention.

FIG. 6 is a schematic drawing of an electronic device having the touch display device.

### DETAILED DESCRIPTION OF THE PREFERRED EMBODIMENT

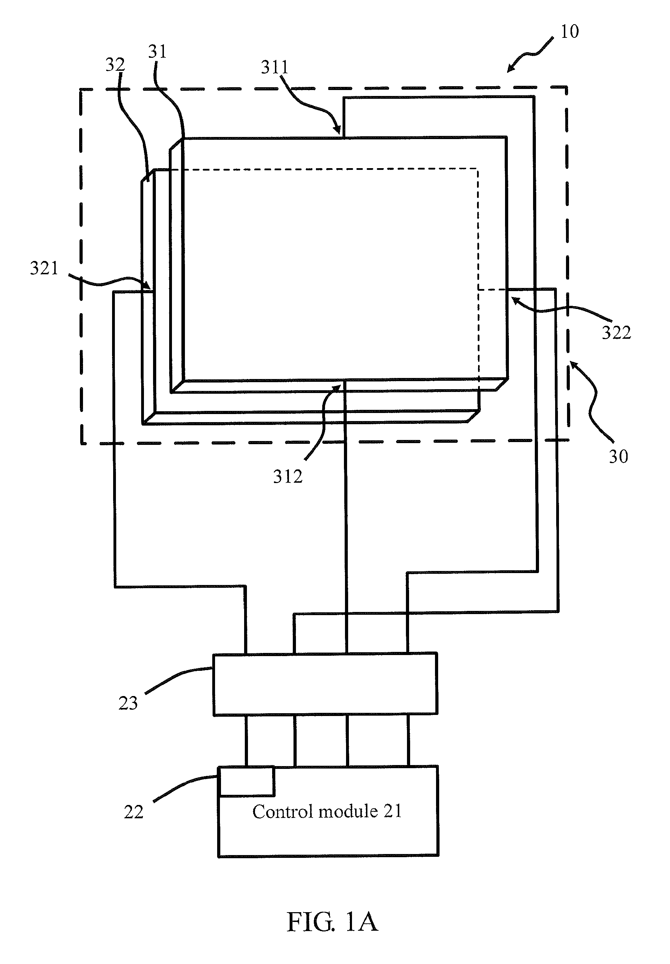

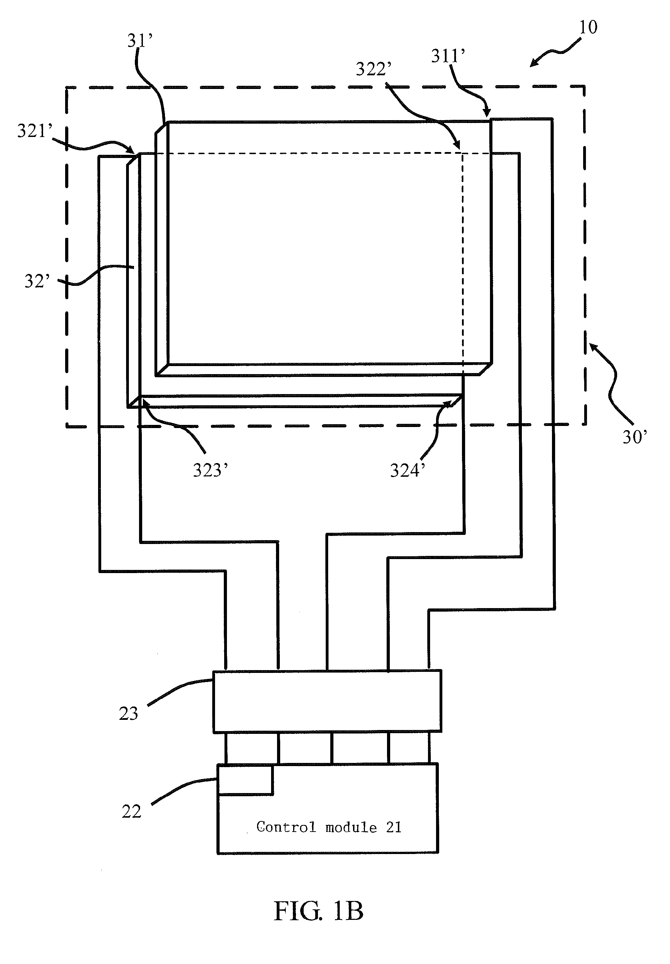

Please refer to FIG. 1A and FIG. 1B. FIGs. 1A-1B are structure drawings of a touch display device according to the present invention.

In one embodiment of the present invention, a touch display device 10 can be used for determining a plurality of touch points. As shown in FIG. 1A, the touch display device 10 comprises a control module 21, a switching circuit 23 and a resistive touch panel 30. The control module 21 comprises a measuring unit 22, and the measuring unit 22 is used for measuring the voltage value of each electrode of the resistive touch panel 30. The control module 21 and the switching circuit 23 are electrically connected. The switching circuit 23 is capable of changing the connection of the circuit, and the control module 21 utilizes the switching circuit 23 to change the connection between each electrode of the resistive touch panel 30 and the power supply end or the grounded end. Furthermore, in an embodiment of the present invention, the switching circuit 23 can also be disposed in the control module 21.

As shown in FIG. 1A, in an embodiment of the present invention, the resistive touch panel 30 is a 4-wire resistive touch panel. The resistive touch panel 30 comprises a first electrical conductive layer 31 and a second electrical conductive layer 32. The first electrical conductive layer 31 has a first electrode 311 and a second electrode 312, and the second electrical conductive layer 32 has a third electrode 321 and a fourth electrode 322. The first electrode 311, the second electrode 312, the third electrode 321 and the fourth electrode 322 are separately and electrically connected to the control module 21. In an embodiment of the present invention, the first electrode 311, the second electrode 312, the third electrode 321 and the fourth electrode 322 all are conductive wires and form the 4-wire resistive touch panel 30. The third electrode 321 and the fourth electrode 322 are disposed at two sides of the second electrical conductive layer 32 and are used for measuring an X axis coordination value of the resistive touch panel 30. While measuring a Y axis coordination value, the third electrode 321 and the fourth electrode 322 disposed at the two sides of the second electrical conductive layer 32 have a voltage value difference which forms an electrical field. Therefore, the third electrode 321 and the fourth electrode 322 disposed at the two sides of the second electrical conductive layer 32 are used for measuring the Y axis coordination value of the resistive touch panel 30. Since 4-wire resistive touch panel is a well known device, there will be no more description.

An inputting object (not shown), such as a touch pen, applies pressure onto the first electrical conductive layer 31 to touch the second electrical conductive layer 32 and generate at least one touching point. Since the first electrical conductive layer 31 touches the second electrical conductive layer 32 and causes a short circuit, a voltage drop is generated. The measuring unit 22 measures the voltage value of the third electrode 321 or the fourth electrode 322 to determine whether the first electrical conductive layer 31 touches the second electrical conductive layer 32. Moreover, the switching circuit 23 enables the control module 21 to control the connection between the first electrode 311, the second electrode 312, the third electrode 321 or the fourth electrode 322 on the resistive touch panel 30 and the measuring unit 22, the power supply end or the grounded end. The control module 21 repeatedly selects two electrodes in non-repeated combinations to be connected to the power supply end or the grounded end, applies a voltage value difference to the two selected electrodes, and measures two voltage values from the non-selected electrode by the measuring unit 22, to obtain two voltage values, and then utilizes the same way to obtain a plurality of voltage value. Therefore, it is determined whether there are a plurality of touching point between the first electrical conductive layer 31 and the second electrical conductive layer 32; and the positions of the plurality of the touching points are further identified. Following description will explain how to identify the position of the plurality of touching points.

As shown in FIG. 1B, in an embodiment of the present invention, the resistive touch panel 30 can also be a 5-wire resistive touch panel 30'. The resistive touch panel 30' comprises a first electrical conductive layer 31' and a second electrical conductive layer 32'. The first electrical conductive layer 31' comprises a sensing electrode 311'. The second electrical conductive layer 32' comprises a first electrode 321', a second electrode 322', a third electrode 323' and a fourth electrode 324'. The sensing electrode 311', the first electrode 321', the second electrode 322', the third electrode 323' and the fourth electrode 324' are separately electrically connected to the control module 21. In an embodiment of the present invention, the sensing electrode 311', the first electrode 321', the second electrode 322', the third electrode 323' and the fourth electrode 324' all are a conductive wire and form the 5-wire resistive touch panel 30'. The first electrode 321', the second electrode 322', the third electrode 323' and the fourth electrode 324' can be used for measuring X axis coordination value and Y axis coordination value of the resistive touch panel 30'. Since 5-wire resistive touch panel is a well known device, there will be no more description.

An inputting object (not shown), such as a touch pen, applies pressure onto the first electrical conductive layer 31' to touch the second electrical conductive layer 32' and generate at least one touching point. Since the first electrical conductive layer 31' touches the second electrical conductive layer 32' and causes a short circuit, a voltage drop is generated. The measuring unit 22' measures the voltage value of the sensing electrode 311' to determine whether the first electrical conductive layer 31' touches the second electrical conductive layer 32'. Moreover, the switching circuit 23 enables the control module 21 to control the connection between the first electrode 321', the second electrode 322', the third electrode 323' or the fourth electrode 324' the on the resistive touch panel 30' and the power supply end or the grounded end. The control module 21 repeatedly selects two electrodes in non-repeated combinations to be connected to the power supply end or the grounded end, applies a voltage value difference to the two selected electrodes, and measures two voltage values from the non-selected electrode by the measuring unit 22, to obtain two voltage values, and then utilizes the same way to obtain a plurality of voltage value. Therefore, it is determined whether there are a plurality of touching point between the first electrical conductive layer 31' and the second electrical conductive layer 32' ; and the positions of the plurality of the touching points are further identified. Following description will explain how to identify the position of the plurality of touching points.

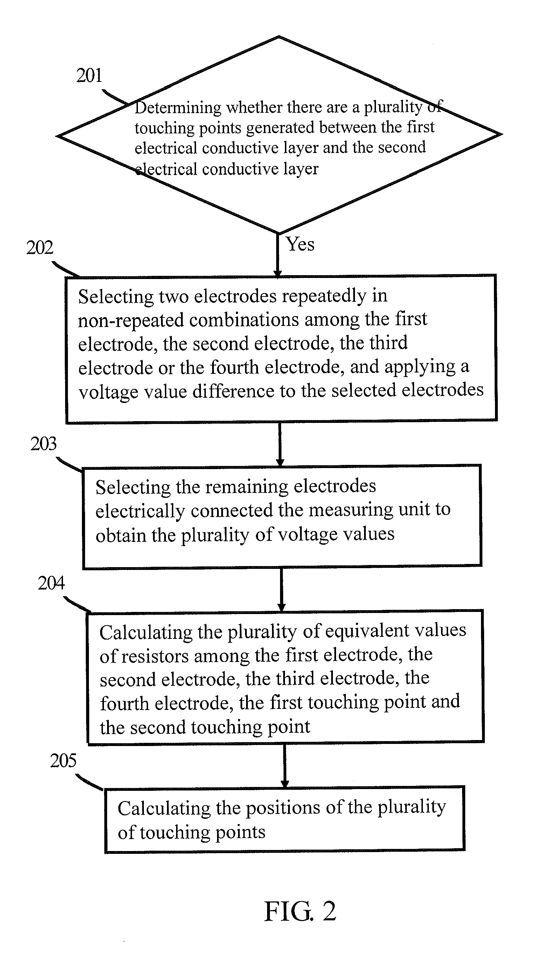

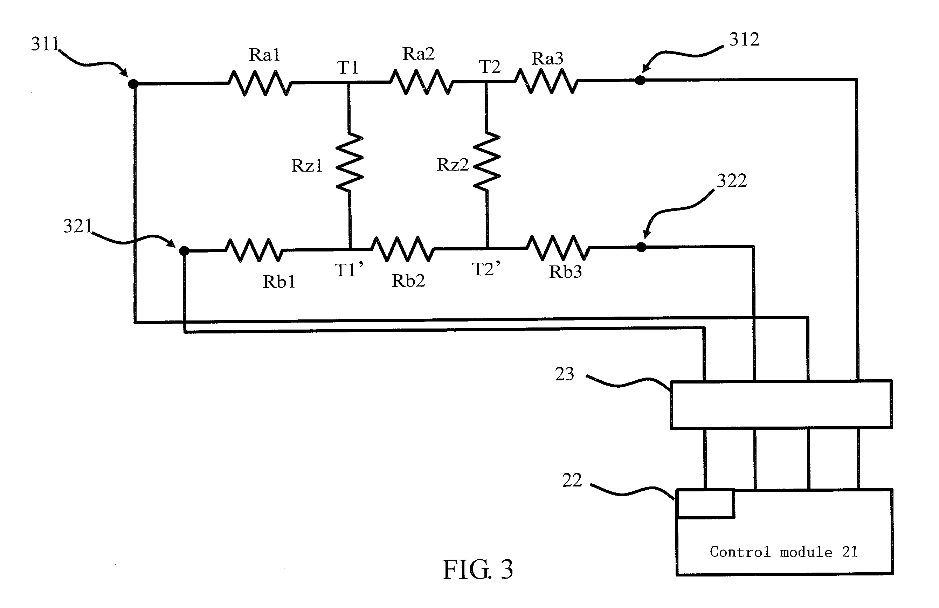

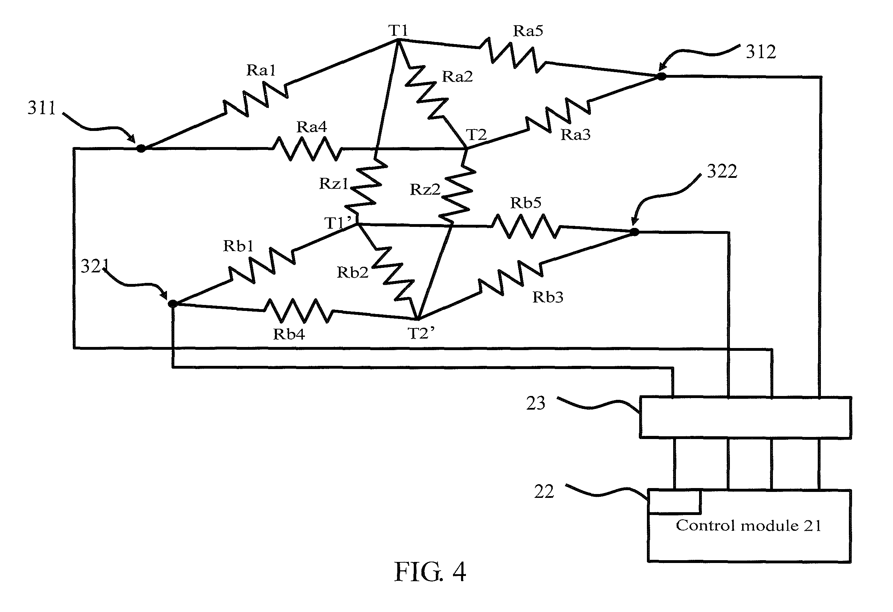

Please refer to FIG. 2 to FIG. 4. FIG. 2 is a flowchart of a method of determining a plurality of touch points on the touch display device according to the present invention. FIG. 3 is an equivalent circuit drawing of a first embodiment of the touch display device according to the present invention. FIG. 4 is an equivalent circuit drawing of a second embodiment of the touch display device according to the present invention. Furthermore, following description utilizes the 4-wire resistive touch panel 30 to explain the method of the present invention; however, the present invention of the present invention can also be applied in the device other than the 4-wire resistive touch panel 30.

Step 201: determining whether there are a plurality of touching points generated between the first electrical conductive layer and the second electrical conductive layer.

First, the control module 21 controls and applies a voltage value difference to two electrodes electrically connected the power supply end and the grounded end on the resistive touch panel 30. Then, the control module 21 measures the voltage value of the other two electrodes to determined whether there is a voltage value difference, as an equivalent circuit in the first embodiment shown in FIG. 3. Furthermore, in the first embodiment of the present invention, the first touching points T1, T1' and the second touching points T2, T2' are generated between the first electrical conductive layer 31 and the second electrical conductive layer 32, but it can be other arrangement. When the first touching points T1, T1' and the second touching points T2, T2' exist between the first electrical conductive layer 31 and the second electrical conductive layer 32, a plurality of equivalent resistors Ra1, Ra2, Ra3, Rb1, Rb2 and Rb3 are formed between the first electrical conductive layer 31 and the second electrical conductive layer 32. A equivalent resistor Rz1 is formed between the first touching point T1 and the first touching point T1', and a equivalent resistor Rz2 is formed between the second touching point T2 and the second touching point T2'. Then, the control module 21 controls the first electrode 311 electrically connected to the power supply end and the second electrode 312 electrically connected to the grounded end of the first electrical conductive layer 31; and applies a voltage value difference. Later, the measuring unit 22 is used to individually measure the voltage values of the third electrode 321 and the fourth electrode 322 of the second electrical conductive layer 32. If there is only one touching point between the first electrical conductive layer 31 and the second electrical conductive layer 32, the voltage values of the third electrode 321 and the fourth electrode 322 will be the same. Therefore, if the third electrode 321 and the fourth electrode 322 have different voltage values, there should be more than one touching point between the first electrical conductive layer 31 and the second electrical conductive layer 32. The control module 21 determines whether the first touching points T1, T1' and the second touching points T2, T2' exist between the first electrical conductive layer 31 and the second electrical conductive layer 32.

However, the above mentioned connections are just examples. For example, the measuring unit 22 might be used to individually measure the voltage values of the first electrode 311 and the second electrode 312 by electrically connecting the third electrode 321 with the power supply end, and electrically connecting the fourth electrode 322 with the grounded end. Alternatively, the measuring unit 22 might be used to measure the voltage values of the third electrode 321 by separately electrically connecting the first electrode 311 and the second electrode 312 with the power supply end and the grounded end.

When it is determined that the plurality of touching points exist between the first electrical conductive layer 31 and the second electrical conductive layer 32, step 202 is performed.

Step 202: selecting two electrodes repeatedly in non-repeated combinations among the first electrode, the second electrode, the third electrode or the fourth electrode, and applying a voltage value difference to the selected electrodes.

The control module 21 utilizes the switching circuit 23 to repeatedly selects two electrodes electrically connected to the power supply end or the grounded end are in non-repeated combinations among the first electrode 311, the second electrode 312, the third electrode 321 and the fourth electrode 322, and applies a voltage value difference.

Simultaneously, step 203 is also performed: selecting the remaining electrodes electrically connected the measuring unit to obtain the plurality of voltage values.

The control module 21 utilizes the switching circuit 23 to selecting the remaining electrodes electrically connected the measuring unit 22 to obtain the plurality of voltage values. If in step 202 the first electrode 311 electrically connected to the power supply end and the second electrode 312 electrically connected to the grounded end are selected, and then the measuring unit 22 is controlled to measure the voltage value of the third electrode 321. Next, the first electrode 311 electrically connected to the grounded end and the second electrode 312 electrically connected to the power supply end selected, and then the measuring unit 22 is controlled to measure the voltage value of the third electrode 321. Therefore, two different voltage values of the third electrode 321 can be obtained. Then, the connection can be change by a non-repeated combinations selecting the third electrode 321 being electrically connected to the power supply end, the fourth electrode 322 being electrically connected to the grounded end, and the measuring unit 22 separately measures the voltage value of the first electrode 311 and the second electrode 312. By repeating the step 202 and step 203 to measure the voltage value of each electrode of the first electrical conductive layer 31 and the second electrical conductive layer 32, the plurality of voltage value is obtained.

Step 204: calculating the plurality of equivalent values of resistors among the first electrode, the second electrode, the third electrode, the fourth electrode, the first touching point and the second touching point.

After the plurality of voltage values are obtained, according to the voltage is proportional to the resistance theory, the plurality of equivalent values of resistors among the first electrode 311, the second electrode 312, the third electrode 321, the fourth electrode 322, the first touching points T1, T1' and the second touching points T2, T2' can be calculated out. Taking the equivalent circuit in the first embodiment shown in FIG. 3 as an example, there are Ra1 to Rz2 eight sets of equivalent resistor between the first electrical conductive layer 31 and the second electrical conductive layer 32. After step 202 and step 203, as long as the relationship of eight sets of voltage value and resistance value are obtained, the eight sets of equivalent values of resistors can be calculated out.

However, the number of the resistor can be different than the number in the first embodiment. In order to have more accurate calculation, there can be more resistors between the first electrical conductive layer 31 and the second electrical conductive layer 32, as the second embodiment shown in FIG. 4. Compared with the first embodiment, in the second embodiment more equivalent resistors Ra4, Ra5, Rb4 and Rb5 are added. By repeating step 202 and step 203, twelve sets of equivalent values of resistors among the first electrode 311, the second electrode 312, the third electrode 321, the fourth electrode 322, the first touching points T1, T1' and the second touching points T2, T2' can be calculated out. Therefore, the control module 21 utilizes the twelve sets of equivalent resistor to more accurately calculate the positions of the first touching points T1, T1' and the second touching points T2, T2'.

After calculating the plurality of equivalent resistors, step 205 is performed: calculating the positions of the plurality of touching points. According to the distance is proportional to the resistance theory, the positions of the plurality of touching points are obtained. In the first embodiment, since the total resistance value from the first electrode 311 to the second electrode 312 and the third electrode 321 to the fourth electrode 322 is fixed, after the eight sets of equivalent values of resistors between the first electrical conductive layer 31 and the second electrical conductive layer 32 are obtained, the positions of the first touching points T1, T1' and the second touching points T2, T2' can be obtained by applying equal proportion principle.

Furthermore, the method of determining the plurality of touching points of the present invention can have different step sequence than the above mentioned step sequence.

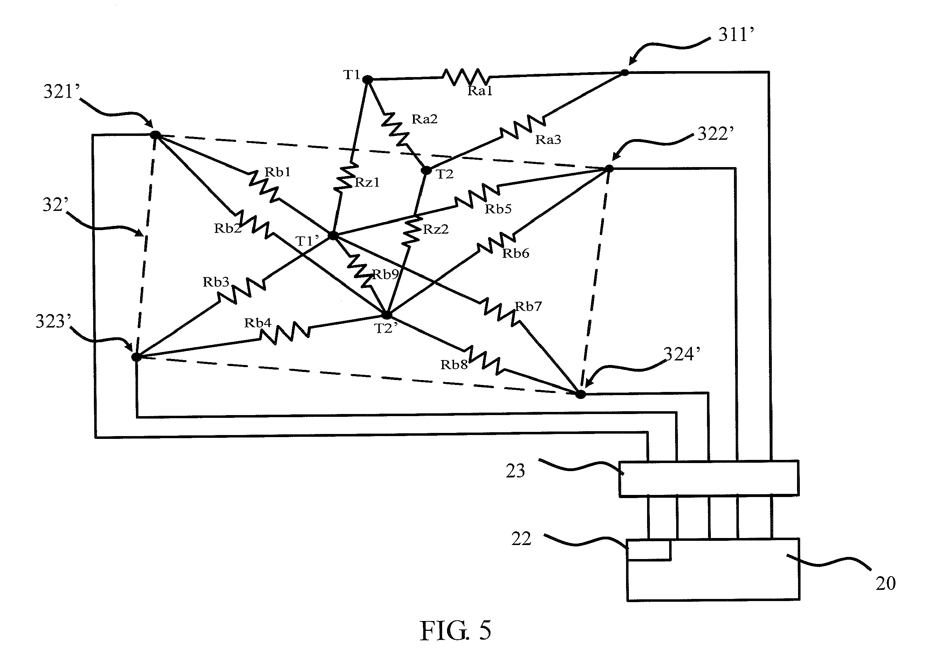

In addition, the method of determining the plurality of touching points can also be applied in the 5-wire resistive touch panel 30' shown in FIG. 1B. Please refer to FIG. 5. FIG. 5 is an equivalent circuit drawing of a 5-wire resistive touch panel according to the present invention.

In this embodiment, the first touching point T1, T1' and the second touching point T2, T2' exist between the first electrical conductive layer 31' and the second electrical conductive layer 32'. As shown in FIG. 5, the control module 21 utilizes the switching circuit 23 to repeatedly selects two electrodes electrically connected to the power supply end or the grounded end in non-repeated combinations among the sensing electrode 311', the first electrode 321', the second electrode 322', the third electrode 323' and the fourth electrode 324', and applies a voltage value difference. The remaining electrodes are electrically connected the measuring unit 22 and two voltage values of the remaining electrodes are obtained, which can be used for obtaining a plurality of voltage value and a relationship for fourteen sets of voltage values and resistance value. Then, according to the voltage is proportional to the resistance theory, fourteen sets of equivalent resistors, the equivalent resistors Ra1∼Ra3 on the first electrical conductive layer 31', the equivalent resistor Rb1∼Rb9 on the second electrical conductive layer 32' and the equivalent resistor Rz1, Rz2 between the touching points, can be obtained. Furthermore, the positions of the first touching point T1, T1' and the second touching point T2, T2' can also be obtained by obtaining only nine sets of equivalent resistors Rb1∼Rb9 on the second electrical conductive layer 32'. Since 5-wire resistive touch panel 30' and the 4-wire resistive touch panel 30 utilize the same method of determining the plurality of touching points, there will be no more description.

With the above-mentioned method, the resistive touch panel 30' can determine the plurality of touching point.

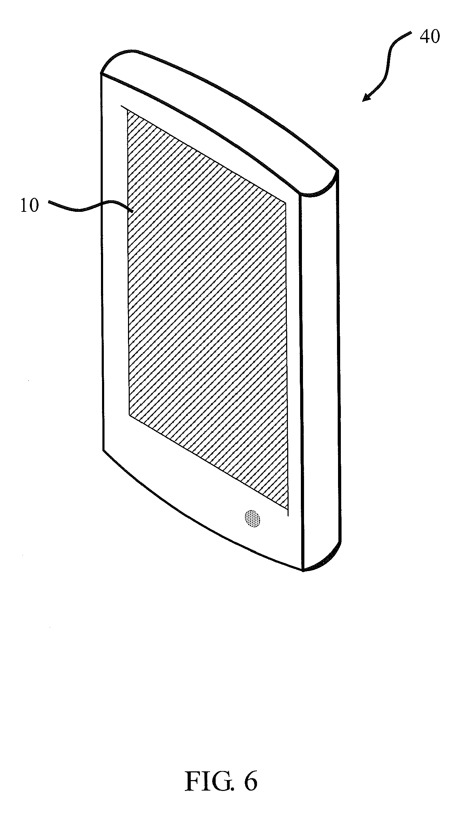

Finally, please refer to FIG. 6. FIG. 6 is a schematic drawing of an electronic device having the touch display device.

The touch display device 10 can be installed on an electronic device 40 for the user to operate the electronic device 40.The electronic device 40 can be a panel computer, a mobile phone, a PDA or any other similar electronic devices. A user can use two touch pens to touch the touch display device 10, the touch display device 10 can obtain two touching points at the same time and perform further related procedure. Therefore, the electronic device 40 can provide more various control method.

Although the present invention has been explained in relation to its preferred embodiment, it is to be understood that many other possible modifications and variations can be made without departing from the spirit and scope of the invention as hereinafter claimed.

## Claims

1. A touch display device comprising:
a resistive touch panel comprising:
a first electrical conductive layer having a first electrode and a second electrode; and
a second electrical conductive layer having a third electrode and a fourth electrode; wherein when the first electrical conductive layer is pressed to touch the second electrical conductive layer by at least one object, at least one touching point is generated; and
a control module electrically connected to the first electrode, the second electrode, the third electrode and the fourth electrode;
wherein when a plurality of touching points are generated between the first electrical conductive layer and the second electrical conductive layer, the control module repeatedly selects two electrodes in non-repeated combinations among the first electrode, the second electrode, the third electrode and the fourth electrode to apply a voltage value difference to the two selected electrodes, and measures two voltage values from the non-selected electrodes to obtain two voltage values, and then utilizing the same way to obtain a plurality of voltage values; the control module utilizes the plurality of voltage values to calculate a plurality of equivalent resistive values formed among the first electrode, the second electrode, the third electrode, the fourth electrode and the plurality of touching points and obtains the positions of the plurality of touching points according to the plurality of equivalent resistive values.

2. The touch display device as claimed in claim 1 further comprising a switching circuit electrically connected to the control module, the control module controlling the switching circuit to select two electrodes to be electrically connected to a power supply end or a grounded end among the first electrode, the second electrode, the third electrode and the fourth electrode, to apply the voltage value difference.

3. The touch display device as claimed in claim 1, wherein the control module comprises a measuring unit for measuring a voltage value, and the measuring unit individually obtains a plurality of voltage values from the first electrode, the second electrode, the third electrode and the fourth electrode.

4. The touch display device as claimed in claim 1, wherein the control module comprises a switching circuit to control the switching circuit to select the two electrodes to be electrically connected to a power supply end or a grounded end among the first electrode, the second electrode, the third electrode and the fourth electrode, to apply the voltage value difference.

5. The touch display device as claimed in claim 1, wherein the plurality of touching points between the first electrical conductive layer and the second electrical conductive layer comprise a first touching point and a second touching point.

6. The touch display device as claimed in claim 5, wherein the control module calculates eight sets of equivalent resistive values formed among the first electrode, the second electrode, the third electrode, the fourth electrode, the first touching point and the second touching point, and calculates the positions of the first touching point and the second touching point according to the eight sets of equivalent resistive values.

7. The touch display device as claimed in claim 5, wherein the control module calculates twelve sets of equivalent values of resistors formed among the first electrode, the second electrode, the third electrode, the fourth electrode, the first touching point and the second touching point, and calculates the positions of the first touching point and the second touching point according to the twelve sets of equivalent resistive values.

8. A touch display device comprising:
a resistive touch panel comprising:
a first electrical conductive layer having a sensing electrode; and
a second electrical conductive layer having a first electrode, a second electrode, a third electrode and a fourth electrode; wherein when the first electrical conductive layer is pressed to touch the second electrical conductive layer by at least one object, at least one touching point is generated; and
a control module electrically connected to the sensing electrode, the first electrode, the second electrode, the third electrode and the fourth electrode;
wherein when a plurality of touching points are generated between the first electrical conductive layer and the second electrical conductive layer, the control module repeatedly selects two electrodes in non-repeated combinations among the sensing electrode, the first electrode, the second electrode, the third electrode and the fourth electrode to apply a voltage value difference to the two selected electrodes, and obtains two voltage values from the non-selected electrode, to obtain two voltage values, and then utilizing the same way to obtain a plurality of voltage values; the control module utilizes the plurality of voltage values to calculate a plurality of equivalent resistive values formed among the sensing electrode, the first electrode, the second electrode, the third electrode, the fourth electrode and the plurality of touching points and obtains the positions of the plurality of touching points according to the plurality of equivalent resistive values.

9. The touch display device as claimed in claim 8 further comprising a switching circuit electrically connected to the control module, the control module controlling the switching circuit to select two electrodes to be electrically connected to a power supply end or a grounded end among the sensing electrode, the first electrode, the second electrode, the third electrode and the fourth electrode, to apply the voltage value difference.

10. The touch display device as claimed in claim 8, wherein the control module comprises a measuring unit for measuring a voltage value, the measuring unit individually obtaining a plurality of voltage values from the sensing electrode, the first electrode, the second electrode, the third electrode and the fourth electrode.

11. The touch display device as claimed in claim 8, wherein the control module comprises a switching circuit, and the control module controls the switching circuit to select two electrodes to be electrically connected to a power supply end or a grounded end among the sensing electrode, the first electrode, the second electrode, the third electrode and the fourth electrode, to apply the voltage value difference.

12. The touch display device as claimed in claim 8, wherein the plurality of touching points between the first electrical conductive layer and the second electrical conductive layer comprise a first touching point and a second touching point.

13. The touch display device as claimed in claim 12, wherein the control module calculates fourteen sets of equivalent resistive values formed among the first electrode, the second electrode, the third electrode, the fourth electrode, the sensing electrode, the first touching point and the second touching point, and calculates the positions of the first touching point and the second touching point according to the fourteen sets of equivalent resistive values.

14. The touch display device as claimed in claim 12, wherein the control module calculates nine sets of equivalent values of resistors formed among the first electrode, the second electrode, the third electrode, the fourth electrode, the first touching point and the second touching point, and calculates the positions of the first touching point and the second touching point according to the nine sets of equivalent resistive values.

15. A method of determining a plurality of touch points for a resistive touch panel, the resistive touch panel comprising a first electrical conductive layer and a second electrical conductive layer; the first electrical conductive layer and the second electrical conductive layer comprising a first electrode, a second electrode, a third electrode and a fourth electrode; the method comprising:
when a plurality of touching points are generated between the first electrical conductive layer and the second electrical conductive layer, selecting two electrodes in non-repeated combinations among the first electrode, the second electrode, the third electrode or the fourth electrode, applying a voltage value difference to the two selected electrodes, and
obtaining two voltage values from the non-selected electrode to obtain two voltage values, and then utilizing the same way to obtain a plurality of voltage values;
utilizing the plurality of voltage values to calculate a plurality of equivalent resistive values; and
obtaining the positions of the plurality of touching points according to
the plurality of equivalent resistive values.

16. The method as claimed in claim 15, wherein the first electrical conductive layer comprises a first electrode and a second electrode, and the second electrical conductive layer comprises a third electrode and a fourth electrode; the method further comprises:
selecting two electrodes separately and electrically connected a power supply end or a grounded end among the first electrode, the second electrode, the third electrode or the fourth electrode, and applying a voltage value difference to the two selected electrodes; and
selecting the remaining electrodes electrically connected a measuring unit to obtain the plurality of voltage values.

17. The method as claimed in claim 16 further comprising:
when a first touching point and a second touching point are generated between the first electrical conductive layer and the second electrical conductive layer, calculating eight sets of equivalent values of resistors formed among the first electrode, the second electrode, the third electrode, the fourth electrode, the first touching point and the second touching point; and
calculating the positions of the first touching point and the second touching point according to the eight sets of equivalent values of resistors.

18. The method as claimed in claim 16 further comprising:
when a first touching point and a second touching point are generated between the first electrical conductive layer and the second electrical conductive layer, calculating twelve sets of equivalent values of resistors formed among the first electrode, the second electrode, the third electrode, the fourth electrode, the first touching point and the second touching point; and calculating the positions of the first touching point and the second touching point according to the twelve sets of equivalent values of resistors.

19. The method as claimed in claim 15, wherein the first electrical conductive layer comprises a sensing electrode, the second electrical conductive layer comprises the first electrode, the second electrode, the third electrode and the fourth electrode; the method further comprises:
selecting two electrodes separately and electrically connected a power supply end or a grounded end among the first electrode, the second electrode, the third electrode, the fourth electrode or the sensing electrode, and applying a voltage value difference to the selected electrodes; and
selecting the remaining electrodes electrically connected a measuring unit to obtain the plurality of voltage values.

20. The method as claimed in claim 19 further comprising:
when a first touching point and a second touching point are generated between the first electrical conductive layer and the second electrical conductive layer, calculating fourteen sets of equivalent values of resistors formed among the first electrode, the second electrode, the third electrode, the fourth electrode, the sensing electrode, the first touching point and the second touching point; and calculating the positions of the first touching point and the second touching point according to the fourteen sets of equivalent values of resistors.

21. The method as claimed in claim 19 further comprising:
when a first touching point and a second touching point are generated between the first electrical conductive layer and the second electrical conductive layer, calculating nine sets of equivalent values of resistors formed among the first electrode, the second electrode, the third electrode, the fourth electrode, the first touching point and the second touching point; and calculating the positions of the first touching point and the second touching point according to the nine sets of equivalent values of resistors.
